# DEMANDE DE BREVET EUROPEEN

(11) **EP 2 241 742 A1**
(43) Date de publication de la demande: **20.10.2010**
(21) Numéro de dépôt: 10290138.6
(22) Date de dépôt: 16.03.2010
(51) Int. Cl.: F02M 25/07, F02B 37/00

(54) **Système de suralimentation à double étage avec dispositif d'épuration de gaz d'échappement pour moteur à combustion interne et procédé pour commander un tel système**

(30) Priorité: 16.04.2009 FR 0901861
(71) Demandeur: IFP Energies nouvelles, 92852 Rueil-Malmaison Cedex (FR)
(72) Inventeur: Pagot, Alexandre, 92500 Rueil Malmaison (FR); Watel, Eric, 92000 Nanterre (FR)

(57) **Abrégé**

La présente invention concerne un système de suralimentation à double étage pour moteur à combustion interne (10) comportant au moins un cylindre (12) avec un répartiteur d'admission (16) ainsi qu'un collecteur d'échappement (18), et un conduit de recirculation de gaz d'échappement (78) à l'admission dudit moteur, ledit système comprenant un étage de suralimentation haute pression (22) avec un turbocompresseur comportant une turbine de détente (26) reliée à un compresseur (30) et un étage de suralimentation basse pression (24) avec un turbocompresseur comportant une turbine de détente (28) reliée à un compresseur (32), et un moyen d'épuration des gaz d'échappement placé entre la sortie d'échappement (40) et la turbine (26) du turbocompresseur haute pression.
Selon l'invention, le système comprend une branche de dérivation des gaz d'échappement (70) partant de la sortie (40) de l'échappement du moteur et aboutissant à la turbine (28) du turbocompresseur basse pression (24).

## Description

La présente invention se rapporte à un système de suralimentation à double étage pour un moteur à combustion interne et à un procédé pour commander un tel système.

Elle concerne plus particulièrement le traitement en dépollution des gaz d'échappement provenant de ce type de moteur.

Comme cela est généralement admis, la puissance générée par un moteur à combustion interne est tributaire de la quantité d'air introduite dans la chambre de combustion de ce moteur. Cet air est mélangé avec un carburant pour réaliser une combustion du mélange ainsi obtenu.

Comme cette quantité d'air est elle-même proportionnelle à la densité de cet air, il est prévu, en cas de besoin de demande de forte puissance, d'augmenter cette quantité au moyen d'une compression. Cette compression se réalise généralement avant que l'air ne soit admis dans cette chambre de combustion.

Cette opération, appelée suralimentation, est habituellement réalisée par un compresseur entraîné par une turbine balayée par les gaz d'échappement du moteur, plus connu sous le terme de turbocompresseur.

Dans le document WO 2008/155268, il est décrit un moteur à combustion interne avec deux étages de turbocompression qui permettent d'augmenter encore plus la compression de l'air introduit dans la chambre de combustion tout en améliorant le rendement de ce moteur et en réduisant sa consommation en carburant.

Plus précisément, ces deux étages sont placés en série l'un par rapport à l'autre et sont constitués de deux turbocompresseurs, un premier turbocompresseur à haute pression (HP) et un autre turbocompresseur à basse pression (BP). Le turbocompresseur HP est plus particulièrement adapté aux faibles débits alors que le turbocompresseur BP est adapté à des débits plus élevés.

Ces turbocompresseurs sont constitués chacun d'une turbine de détente reliée par un arbre d'entraînement à un compresseur. Ces deux turbocompresseurs sont configurés d'une manière telle que la turbine du turbocompresseur HP, alimentée par les gaz d'échappement prélevés sur la voie d'échappement du moteur, alimente à son tour la turbine du turbocompresseur BP alors que le compresseur du turbocompresseur BP alimente le compresseur du turbocompresseur HP.

Comme mieux décrit dans le document précité, il est prévu un circuit de recirculation des gaz brûlés, dit circuit EGR. Ce circuit comprend essentiellement un conduit, dénommé conduit EGR, permettant d'introduire des gaz d'échappement à partir d'un piquage de la voie d'échappement de ce moteur (généralement en sortie du collecteur d'échappement) vers un point de liaison à l'admission de celui-ci (plus précisément vers le répartiteur d'admission).

Ce circuit EGR permet ainsi d'ajouter des gaz d'échappement au mélange carburé, notamment dans le but de diminuer la production d'oxydes d'azote (NOx) grâce à une réduction de la température de combustion de ce mélange.

Il est également prévu de loger un moyen additionnel d'épuration des gaz en amont de ce conduit EGR et en aval de l'échappement. Ce moyen d'épuration, désigné dans la suite de la description sous le terme de précatalyseur, vient s'ajouter au dispositif principal d'épuration de gaz d'échappement que comporte habituellement tous moteurs sous la forme d'un catalyseur.

Avant de pouvoir traiter efficacement les polluants contenus dans les gaz d'échappement, ce catalyseur principal, qui est initialement à une température ambiante, doit être chauffé par les gaz d'échappement qui le traversent jusqu'à ce qu'il atteigne un niveau de température suffisant pour son amorçage (ou température de "light off").

Pour minimiser le rejet de polluants dans l'atmosphère, il est prévu que le précatalyseur atteigne plus rapidement sa température d'amorçage que le catalyseur principal compte tenu du fait qu'il est placé le plus prés de la sortie de l'échappement. Ce précatalyseur permet ainsi de traiter plus rapidement une partie des polluants de ces gaz.

Plus particulièrement, ce précatalyseur est avantageusement un précatalyseur d'oxydation qui permet de traiter les HC (hydrocarbures imbrûlés) et le CO (monoxyde de carbone) contenus dans les gaz d'échappement.

Cependant, ce précatalyseur, lorsqu'il est traversé par des débits de gaz d'échappement importants, crée une perte de charge significative qui a pour inconvénient majeur de créer une contre-pression qui entrave l'évacuation des gaz d'échappement hors des cylindres du moteur.

Pour éviter cela et comme mieux décrit dans le document précité, il est nécessaire que le précatalyseur soit placé en aval du conduit de contournement que comporte la turbine HP et qui permet de court-circuiter cette turbine pour des gaz de fort débits.

De ce fait, lorsque le turbocompresseur BP est utilisé seul, aucune perte de charge n'est créée par ce précatalyseur.

Un autre inconvénient réside dans le fait que ce précatalyseur n'est pas placé de manière à ce que les gaz d'échappement recirculés soient également épurés avant d'être réintroduits à l'admission. Ceci est d'autant plus dommageable que la suppression des HC et du CO contenus dans ces gaz permet, d'une part, de faciliter le contrôle de la charge et, d'autre part, de réduire l'encrassement des différentes parties du moteur balayées par ces gaz d'échappement recirculés.

La présente invention se propose de remédier aux inconvénients ci-dessus grâce à un système qui apporte les mêmes fonctionnalités du système de suralimentation tout en permettant d'épurer les gaz d'échappement du circuit EGR.

A cet effet, l'invention concerne un système de suralimentation à double étage pour moteur à combustion interne comportant au moins un cylindre avec un répartiteur d'admission ainsi qu'un collecteur d'échappement, et un conduit de recirculation de gaz d'échappement à l'admission dudit moteur, ledit système comprenant un étage de suralimentation haute pression avec un turbocompresseur comportant une turbine de détente reliée à un compresseur et un étage de suralimentation basse pression avec un turbocompresseur comportant une turbine de détente reliée à un compresseur, et un moyen d'épuration des gaz d'échappement placé entre la sortie d'échappement et la turbine du turbocompresseur haute pression, **caractérisé en ce qu**'il comprend une branche de dérivation des gaz d'échappement partant de la sortie de l'échappement du moteur et aboutissant à la turbine du turbocompresseur basse pression.

Avantageusement, la branche de dérivation peut comprendre un moyen de vannage.

De manière préférentielle, le moyen de vannage peut comprendre une vanne multipositions.

La branche en dérivation peut aboutir en un point de jonction sur une conduite reliant la sortie de la turbine du turbocompresseur haute pression à l'admission de la turbine du turbocompresseur basse pression.

Le moyen d'épuration des gaz d'échappement peut être placé entre la sortie des gaz d'échappement et le conduit de recirculation des gaz d'échappement.

L'invention concerne également un procédé pour commander un système de suralimentation à double étage pour moteur à combustion interne comportant au moins un cylindre avec un répartiteur d'admission ainsi qu'un collecteur d'échappement, et un conduit de recirculation de gaz d'échappement à l'admission dudit moteur, ledit système comprenant un étage de suralimentation haute pression avec un turbocompresseur comportant une turbine de détente reliée à un compresseur et un étage de suralimentation basse pression avec un turbocompresseur comportant une turbine de détente reliée à un compresseur, et un moyen d'épuration des gaz d'échappement placé entre la sortie d'échappement et la turbine du turbocompresseur haute pression, **caractérisé en ce qu'**il consiste, pour un mode de fonctionnement du moteur, à diriger, à partir de la sortie d'échappement, une partie des gaz d'échappement vers une branche de dérivation aboutissant à la turbine du turbocompresseur basse pression et l'autre partie de ces gaz vers une conduite raccordée au conduit de recirculation des gaz.

Le procédé peut consister, pour un autre mode de fonctionnement du moteur, à interdire, à partir de la sortie d'échappement, la circulation des gaz d'échappement vers la branche de dérivation, et à diriger les gaz d'échappement vers la conduite amenant ces gaz au conduit de recirculation des gaz et à l'admission de la turbine du turbocompresseur haute pression.

Le procédé peut consister à faire passer les gaz circulant dans la conduite au travers du moyen d'épuration de gaz d'échappement.

Les autres caractéristiques et avantages de l'invention vont apparaître à la lecture de la description qui va suivre, donnée à titre uniquement illustratif et non limitatif, et à laquelle sont annexées :
- la figure 1 qui illustre un système de suralimentation à doublé étage avec un dispositif additionnel d'épuration de gaz d'échappement pour un moteur à combustion interne selon l'invention ;
- la figure 2 qui montre le moteur de la figure 1 selon une première configuration de fonctionnement ;
- la figure 3 qui montre le moteur de la figure 1 selon une deuxième configuration de fonctionnement et
- la figure 4 qui montre le moteur de la figure 1 selon une troisième configuration de fonctionnement.

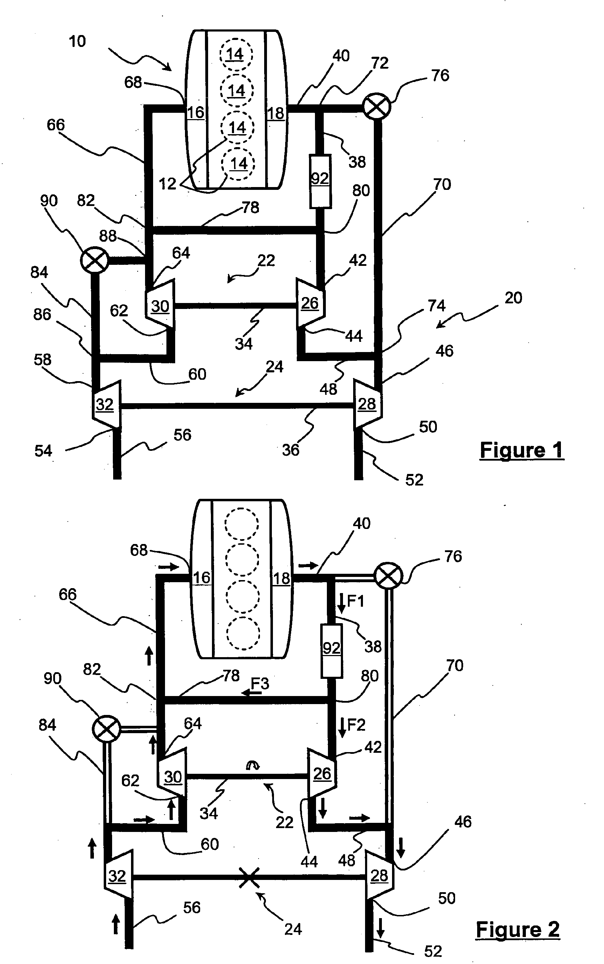

Sur la figure 1, le moteur à combustion interne 10, en particulier à injection directe et notamment de type Diesel, comprend au moins un cylindre 12 avec une chambre de combustion 14 dans laquelle se produit la combustion d'un mélange carburé. Ce moteur comprend également une répartiteur d'admission 16 utilisé pour distribuer un fluide nécessaire à la réalisation d'un mélange carburé dans les chambres de combustion. Par fluide, il est entendu ici un mélange d'air suralimenté et de gaz d'échappement recirculés. Les gaz d'échappement résultant de la combustion du mélange carburé contenu dans les chambres de combustion sont évacués vers un collecteur d'échappement 18.

Le système de suralimentation 20 comprend deux étages de turbocompression avec un premier étage formé par un turbocompresseur HP 22 et un deuxième étage par un turbocompresseur BP 24.

Chaque turbocompresseur comprend une turbine 26, 28 entraînant en rotation un compresseur 30, 32 par l'intermédiaire d'un arbre 34, 36.

Les deux turbocompresseurs sont disposés l'un par rapport à l'autre d'une manière telle que la turbine de détente 26 du turbocompresseur HP 22 (ou turbine HP) puisse alimenter la turbine de détente 28 du turbocompresseur BP 24 (ou turbine BP) et que le compresseur 30 du turbocompresseur HP (ou compresseur HP) puisse être alimenté par le compresseur 32 du turbocompresseur BP (ou compresseur BP).

Comme mieux visible sur la figure 1, une conduite de circulation de gaz d'échappement 38 relie la tubulure de sortie 40 du collecteur d'échappement 18 à l'admission 42 de la turbine HP dont la sortie 44 est reliée à l'admission 46 de la turbine BP 28 par une conduite de circulation de gaz d'échappement 48. La sortie 50 de la turbine BP est reliée à la ligne d'échappement 52 que comporte habituellement tout moteur. Généralement cette ligne est pourvue d'un dispositif principal d'épuration de gaz d'échappement (non représenté), comme un catalyseur, notamment un catalyseur trois voies.

L'admission 54 du compresseur BP 32 est alimentée en un fluide extérieur, comme de l'air, par une voie d'alimentation 56. La sortie 58 du compresseur BP est reliée par une conduite de circulation d'air 60 à l'admission 62 du compresseur d'air HP 30, et la sortie 64 de ce compresseur est connectée par une conduite de circulation d'air 66 à l'entrée 68 du répartiteur d'admission 16.

Les termes "amont" et "aval " qui seront utilisés dans la suite de la description le seront en relation avec le sens de circulation des gaz d'échappement entre le collecteur d'échappement 18 et la ligne d'échappement 52 ou avec le sens de circulation du fluide entre la voie d'alimentation 56 et le répartiteur d'admission 16.

Une branche de dérivation 70 des gaz d'échappement prend naissance en un piquage 72 en amont de la turbine HP 26 sur l'intersection entre la conduite 38 et la tubulure de sortie 40 du collecteur. Cette branche aboutit en un point de jonction 74 sur la conduite 48 entre la sortie 44 de la turbine HP et l'admission 46 de la turbine BP.

Cette branche comporte, entre le piquage et le point de jonction, un moyen de vannage 76, permettant d'y contrôler la circulation des gaz d'échappement. Avantageusement, ce moyen de vannage est une vanne multipostions entre une position de pleine ouverture de cette branche jusqu'à une position de pleine fermeture.

Bien entendu, cette vanne est commandée par tous moyens, généralement connus par l'homme du métier, sous le contrôle du calculateur moteur de ce moteur.

Un conduit 78, dit conduit EGR (Exhaust Gas Recirculation), permet de réintroduire des gaz d'échappement du moteur vers son admission. Plus précisément, ce conduit relie un point de liaison 80 sur la conduite 38, en amont de la turbine HP 26 et en aval du piquage 72, à un autre point de liaison 82 de la conduite 66.

Cette recirculation des gaz d'échappement à l'admission du moteur est classiquement utilisée pour réduire les émissions de certains polluants, comme les oxydes d'azotes (NOx), qui sont émis lors de la combustion du mélange carburé.

Bien entendu et comme cela est largement connu, ce conduit EGR peut porter un échangeur de chaleur permettant de refroidir les gaz d'échappement qui le traversent ainsi qu'une vanne, plus connue sous le vocable de vanne EGR, qui permet de contrôler la circulation des gaz d'échappement dans ce conduit EGR.

L'étage de compression HP comprend un conduit de court-circuit 84 du compresseur HP 30. Ce conduit part d'un point amont 86 de la conduite 60 entre les compresseurs HP et BP pour aboutir en un point aval 88 situé entre la sortie 64 du compresseur HP et le point de liaison 82 avec la conduit EGR. Ce conduit porte, entre les points amont et aval, un moyen de vannage 90 permettant d'y contrôler la circulation de l'air.

Un moyen d'épuration additionnel des gaz d'échappement 92, dénommé dans la suite de la description "précatalyseur", est placé sur la conduite 38 entre le point de liaison 80 avec le conduit EGR et le piquage 72 avec la branche 70.

Ce précatalyseur est habituellement un corps poreux traversé par les gaz d'échappement et comporte des phases catalytiques permettant de faire réagir certains des polluants des gaz d'échappement avec ces phases catalytiques.

De manière préférentielle, ce précatalyseur est placé au plus près de la sortie 40 des gaz d'échappement de façon à pouvoir bénéficier au maximum de la chaleur contenue dans ces gaz. Par cela, ce précatalyseur se chauffe plus vite et atteint sa température d'amorçage de manière plus rapide.

Avantageusement, ce précatalyseur est prévu pour traiter notamment les HC et le CO qui sont contenus dans les gaz d'échappement.

Pour le mode de fonctionnement où le débit des gaz d'échappement est compatible avec l'utilisation du turbocompresseur HP 22, comme pour les phases de ralenti ou de faibles charges du moteur, la vanne 76 est commandée dans une position de pleine fermeture de la branche 70 en y interdisant toute circulation des gaz d'échappement, comme cela est illustré à la figure 2. De même, la vanne 90 est commandée en fermeture de façon à empêcher toute circulation d'air dans le conduit de circuit de court-circuit 84.

Les gaz d'échappement provenant de la tubulure de sortie 40 du collecteur 18 circulent dans la conduite 38 (flèche F1) en traversant le précatalyseur 92. Ce précatalyseur traite les polluants HC et CO contenus dans ces gaz en les éliminant en très grande partie de ces gaz.

Les gaz traités arrivent ensuite au point de liaison 80 d'ou ils se séparent en deux flux, un premier flux F2 vers la turbine HP 26 et un deuxième flux F3 vers le conduit EGR 78 pour la recirculation des gaz d'échappement à l'admission du moteur.

Le flux F2 des gaz d'échappement arrive à l'admission 42 de la turbine HP 26 avec une pression et une énergie telles que ces gaz entraînent en rotation le rotor que comporte cette turbine. Ces gaz sont ensuite évacués de cette turbine par la sortie 44 pour circuler dans la conduite 48 et pour être amenés à l'admission 46 de la turbine BP 28. Ces gaz sont ensuite évacués dans la ligne d'échappement 52 au travers de la sortie 50 de la turbine BP.

Pour des raisons de simplification de la description qui va suivre, il est considéré que, dans l'exemple de la figure 2, l'énergie des gaz d'échappement qui traverse la turbine BP ne permet pas la mise en rotation de cette turbine. Par conséquent, le compresseur BP n'est pas entraîné en rotation par l'arbre d'entraînement 36.

L'air frais, arrivant par la voie d'alimentation 56 à l'admission 54 du compresseur BP 32, traverse ce compresseur pour arriver à sa sortie à une pression voisine de la pression de sa pression à l'admission (généralement la pression atmosphérique). Cet air est ensuite reçu à l'admission 62 du compresseur HP 30 dont le rotor est entraîné en rotation par l'arbre d'entraînement 34 relié à la turbine HP 26. De par cette rotation, l'air est comprimé et est évacué, sous forme comprimée, au travers de la sortie 64 pour aboutir au point de liaison 82. A partir de ce point, cet air comprimé se mélange avec le flux F3 des gaz d'échappement circulant dans le conduit EGR 78. Le mélange d'air comprimé et de gaz d'échappement est ensuite dirigé par la conduite 66 vers l'entrée 68 du répartiteur d'admission 16 pour obtenir en final un mélange carburé apte à brûler dans les chambres de combustion 14.

Comme le précatalyseur est actif très tôt - grâce à sa composition et à sa position très proche de la sortie de l'échappement - le flux F3 des gaz d'échappement mélangés à l'air comprimé et recirculés à l'admission est débarrassé d'une grande partie de ses polluants. De même, le flux F2 des gaz d'échappement est dépollué et arrive à la sortie 50 de la turbine BP en étant épuré. De ce fait, même si les moyens de dépollution principaux placés sur la ligne d'échappement 52 ne sont pas opérationnels, les gaz d'échappement qui sont rejetés dans l'atmosphère sont dépollués en grande partie.

Bien entendu, l'homme du métier prendra toutes les mesures nécessaires pour configurer le turbocompresseur HP 22 de manière à ce qu'il soit pleinement actif pour la quantité d'énergie des gaz d'échappement provenant du moteur fonctionnant au ralenti ou à faibles charges.

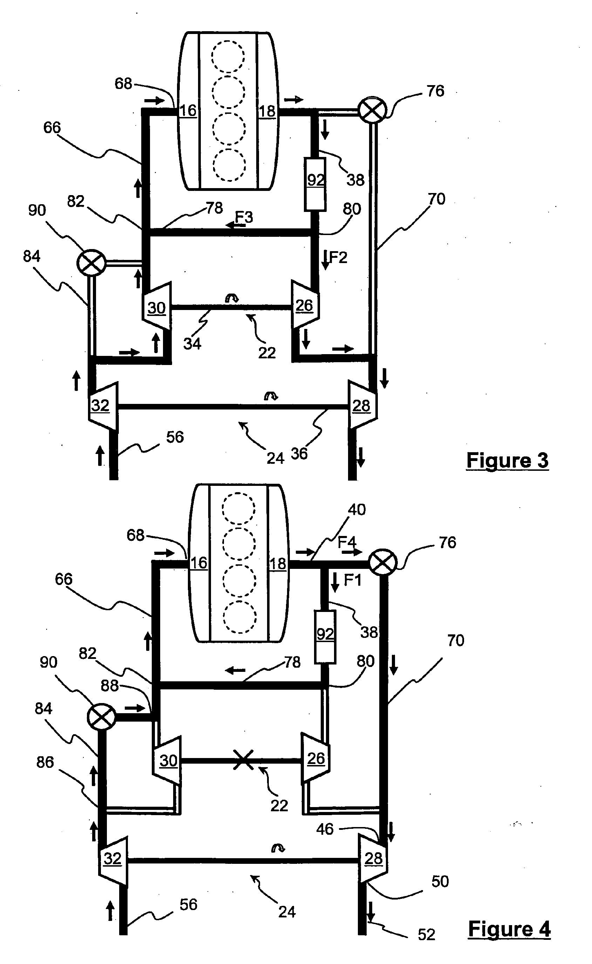

Pour le fonctionnement à moyennes charges du moteur (figure 3), la configuration est identique à celle de la figure 2 avec le maintien en position de fermeture de la vanne 76 pour la branche 70 et de la vanne 90 pour le conduit de court-circuit 84.

Dans ces conditions de fonctionnement la pression et l'énergie des gaz d'échappement sont augmentées par rapport à celles du mode de la figure 2. Le flux F2 des gaz d'échappement traverse la turbine HP 26 et entraîne en rotation le rotor de cette turbine. Ces gaz sont ensuite évacués de cette turbine HP pour arriver à la turbine BP 28 avec une pression et une énergie des gaz d'échappement suffisantes pour entraîner en rotation le rotor de cette turbine BP.

Ainsi, le flux F2 des gaz d'échappement permet la rotation des deux turbines 26 et 28 qui, à leur tour, entraînent en rotation les deux compresseurs 30 et 32 par l'intermédiaire des arbres d'entraînement 34 et 36.

L'air frais arrivant par la voie 56 traverse le compresseur BP 32 en étant comprimé à un premier niveau (de l'ordre de quelques centaines de millibars au dessus de la pression atmosphérique). Cet air comprimé est ensuite admis dans le compresseur HP 30 pour en ressortir en un état comprimé avec une pression supérieure à celle de la sortie du compresseur BP 32.

L'air comprimé sortant du compresseur HP aboutit au point de liaison 82 où il se mélange avec le flux F3 des gaz d'échappement circulant dans le conduit EGR 78. Le mélange d'air comprimé et de gaz d'échappement est ensuite dirigé par la conduite 66 vers l'entrée 68 du répartiteur d'admission 16 pour obtenir en final un mélange carburé apte à brûler dans les chambres de combustion 14.

De même, comme précédemment décrit, les gaz d'échappement mélangés à l'air comprimé et recirculés à l'admission ainsi que ceux évacués dans l'atmosphère par la ligne d'échappement sont débarrassés d'une grande part de leur polluants.

Pour le fonctionnement à charges plus élevées, comme illustré sur la figure 4, la vanne 76 est en position de peine ouverture de la branche de dérivation 70 et la vanne 90 autorise la circulation d'air dans le conduit de court-circuit 84 du compresseur BP 32.

Les gaz d'échappement évacués du collecteur 18 empruntent préférentiellement le circuit à forte perméabilité. Plus précisément, ces gaz empruntent la branche de dérivation 70 en court-circuitant ainsi la turbine HP 26. De ce fait, seule la turbine BP 28 est entraînée en rotation par les gaz d'échappement en rendant ainsi le turbocompresseur HP 22 inopérationnel. De même et comme c'est généralement le cas, le différentiel de pression entre l'admission et l'échappement est favorable à l'établissement d'un débit de gaz de l'échappement vers l'amission et les gaz d'échappement empruntent la conduite 38 pour être recirculés à l'admission du moteur.

Ainsi, dans cette configuration, les gaz d'échappement se séparent, à partir de la sortie 40, en deux flux de capacités différentes, un flux F1 de faible capacité en direction du précatalyseur 92 et un flux F4 de grande capacité dans la branche de dérivation70.

Le flux F4 arrive à l'admission 46 de la turbine BP 28 en entraînant en rotation son rotor. Ces gaz sont ensuite évacués dans la ligne d'échappement 52 au travers de la sortie 50 de la turbine BP. Comme le dispositif principal d'épuration placé sur la ligne d'échappement 52 a atteint sa température d'amorçage, les gaz d'échappement sont traités avant d'être rejetés dans l'atmosphère.

Le flux F1 traverse le précatalyseur 92 pour aboutir au point de liaison 80 et pour circuler dans la conduite EGR 78 jusqu'a l'autre point de liaison 82.

De ce fait, l'air frais arrive par la voie d'alimentation 56 et traverse le compresseur BP 32 pour y être comprimé et en ressortir à une pression élevée pour aboutir au point amont 86 du conduit 84. Cet air comprimé circule dans le conduit 84 pour aboutir au point aval 88 sur la conduite 66. L'air comprimé arrive ensuite au point de liaison 82 où se mélange avec le flux des gaz d'échappement circulant dans le conduit EGR 78.

Comme précédemment mentionné, le mélange d'air comprimé et de gaz d'échappement est ensuite dirigé par la conduite 66 vers l'entrée 68 du répartiteur d'admission 16 pour obtenir le mélange carburé qui brûle dans les chambres de combustion 14.

Grâce à cette disposition, le flux des gaz d'échappement mélangés à l'air comprimé et recirculés à l'admission est toujours débarrassé d'une grande partie de ses polluants par le précatalyseur 84 et cela quelque soit le mode de fonctionnement du moteur.

La présente invention n'est pas limitée à l'exemple décrit mais englobe toutes variantes et tous équivalents couverts par la présente invention.

## Revendications

1. Système de suralimentation à double étage pour moteur à combustion interne (10) comportant au moins un cylindre (12) avec un répartiteur d'admission (16) ainsi qu'un collecteur d'échappement (18), et un conduit de recirculation de gaz d'échappement (78) à l'admission dudit moteur, ledit système comprenant un étage de suralimentation haute pression (22) avec un turbocompresseur comportant une turbine de détente (26) reliée à un compresseur (30) et un étage de suralimentation basse pression (24) avec un turbocompresseur comportant une turbine de détente (28) reliée à un compresseur (32), et un moyen d'épuration des gaz d'échappement placé entre la sortie d'échappement (40) et la turbine (26) du turbocompresseur haute pression, **caractérisé en ce qu'**il comprend une branche de dérivation des gaz d'échappement (70) partant de la sortie (40) de l'échappement du moteur et aboutissant à la turbine (28) du turbocompresseur basse pression (24).

2. Système de suralimentation selon la revendication 1, **caractérisé en ce que** la branche de dérivation comprend un moyen de vannage (76).

3. Système de suralimentation selon la revendication 2, **caractérisé en ce que** le moyen de vannage comprend une vanne multipositions (76).

4. Système de suralimentation selon la revendication 1 ou 2, **caractérisé en ce que** la branche en dérivation (70) aboutit en un point de jonction (74) sur une conduite (48) reliant la sortie de la turbine (44) du turbocompresseur haute pression (22) à l'admission (46) de la turbine (28) du turbocompresseur basse pression (24).

5. Système de suralimentation selon l'une des revendications précédentes, **caractérisé en ce que** le moyen d'épuration des gaz d'échappement (92) est placé entre la sortie (40) des gaz d'échappement et le conduit de recirculation des gaz d'échappement (78).

6. Procédé pour commander un système de suralimentation à double étage pour moteur à combustion interne (10) comportant au moins un cylindre (12) avec un répartiteur d'admission (16) ainsi qu'un collecteur d'échappement (18), et un conduit de recirculation de gaz d'échappement (78) à l'admission dudit moteur, ledit système comprenant un étage de suralimentation haute pression (22) avec un turbocompresseur comportant une turbine de détente (26) reliée à un compresseur (30) et un étage de suralimentation basse pression (24) avec un turbocompresseur comportant une turbine de détente (28) reliée à un compresseur (32), et un moyen d'épuration des gaz d'échappement placé entre la sortie d'échappement et la turbine du turbocompresseur haute pression, **caractérisé en ce qu'**il consiste, pour un mode de fonctionnement du moteur, à diriger, à partir de la sortie (40) d'échappement, une partie (F4) des gaz d'échappement vers une branche de dérivation (70) aboutissant à la turbine (28) du turbocompresseur basse pression (24) et l'autre partie (F1) de ces gaz vers une conduite (38) raccordée au conduit de recirculation des gaz.

7. Procédé pour commander un système de suralimentation selon la revendication 6, **caractérisé en ce qu'**il consiste, pour un autre mode de fonctionnement du moteur, à interdire, à partir de la sortie (40) d'échappement, la circulation des gaz d'échappement vers la branche de dérivation (70), et à diriger les gaz d'échappement vers la conduite (38) amenant ces gaz au conduit de recirculation des gaz (78) et à l'admission de la turbine (26) du turbocompresseur haute pression (22).

8. Procédé pour commander un système de suralimentation selon la revendication 6 ou 7, **caractérisé en ce qu'**il consiste à faire passer les gaz circulant dans la conduite (38) au travers du moyen d'épuration (92) de gaz d'échappement.
